# EUROPEAN PATENT APPLICATION

(11) **EP 1 666 277 A1**
(43) Date of publication of application: **07.06.2006**
(21) Application number: 05111087.2
(22) Date of filing: 22.11.2005
(51) Int. Cl.: B60C 11/00

(54) **Tire tread contour**

(30) Priority: 06.12.2004 US 5336
(71) Applicant: THE GOODYEAR TIRE & RUBBER COMPANY, Akron, Ohio 44316-0001 (US)
(72) Inventor: Van Nguyen, Gia, B-6730 Rossignol (BE); Cambron, Anne-France Gabrielle Jeanne-Marie, L-4735 Petange (LU)
(74) Representative: Kutsch, Bernd

(57) **Abstract**

Pneumatic tire (10) with improved wear balance and improved handling performance under tire service conditions like loading, braking, and cornering is disclosed. The tread (12) of the pneumatic tire (10) includes a radially outermost surface with at least first, second, and third regions (46,48,50) defined between the tire's equatorial plane (EP) and the tire's shoulder (20). The second region (48) is arranged coextensive with the third region (50) to define a circumferential interface and the second region (48) is tangent with the third region (50) along the circumferential interface. A radius of curvature (R3) of the third region (50) is less than a radius of curvature (R2) of the second region (48), wherein R3 = 4 - 6 x R4; and wherein R3 = 0,25 - 0,5 x R2 and R2 = 0,2 - 0,5 x R1.
According to an embodiment the radii areas follows: R1 ... 700 - 800 mm, R2 ... 200 - 300 mm, R3 ... 70 - 130 mm, and R4 ... 10 - 30 mm.

## Description

The present invention generally relates to pneumatic tires and, more particularly, to pneumatic tires having an improved footprint pressure distribution.

### Background of the Invention

Conventional tires include a tread with a road-contacting surface that, when the tire is loaded, experiences a footprint pressure distribution contingent in magnitude upon, among other factors, the bending stiffness of the tire shoulder and the tread skewness. Tread skewness increases abruptly near the shoulder under tire service conditions like loading, braking, and cornering because of the low radius of the region of the tire interposed between the road-contacting surface and the sidewalls. Typically, the radius of the tread surface in this region ranges from 0.05 to 0.1 of the adjacent radius of the tread area. The abrupt increase in tread skewness caused by such shoulder bending precipitates a high footprint pressure at the side edges of the tire footprint. Under severe shoulder bending conditions as are experienced, for example, under sharp high-speed cornering, the significant increase in tread skewness may reduce the footprint contact to the point of tire grip loss, especially in wet driving conditions, which may produce catastrophic results.

One conventional approach for reducing the abrupt tread skewness is to increase the radius of the shoulder. However, the resultant improvement is relatively minor because, as a result of tire dimension constraints, the maximum increase in shoulder radius is generally limited to twice the original shoulder radius. In addition, increasing the shoulder radius effectively reduces the width of the tire footprint. Another conventional approach is to increase the drop of the tread area from the equatorial plane to the shoulder. Although the pressure buildup is reduced because the shoulder radius does not reach the road, the resulting curvature of the tread surface causes a loss of wear balance.

For these and other reasons, it would be desirable to provide a pneumatic tire characterized by reduced tread skewness.

### Summary of the Invention

The invention relates to a pneumatic tire according to claim 1. The dependent claims cover preferred embodiments of the invention.

In one embodiment of the present invention, the pneumatic tire includes a carcass having an axis of rotation, a sidewall centered about the axis of rotation, and a shoulder adjoining the sidewall. Disposed radially outward of the carcass is a tread having an equatorial plane bisecting the tread surface and perpendicular to the axis of rotation. The tread also includes a radially outermost surface having a plurality of at least first, second and third regions defined between the equatorial plane and the shoulder. The third region may be arranged coextensive with the shoulder, although the invention is not so limited. The second region is arranged coextensive with the third region to define a circumferential interface and the second region is tangent with the third region along this circumferential interface. A radius of curvature of the third region is less than a radius of curvature of the second region. In one specific embodiment, the radius of curvature of the third region is four to six times, preferably five times the radius of curvature of the shoulder, and the radius of curvature of the third region is equal to 0.25 to 0.5 times the radius of curvature of the second region.

By virtue of the foregoing, there is provided an improved pneumatic tire with better wear balance and better handling performance under tire service conditions like loading, braking, and cornering.

### Brief Description of the Drawings

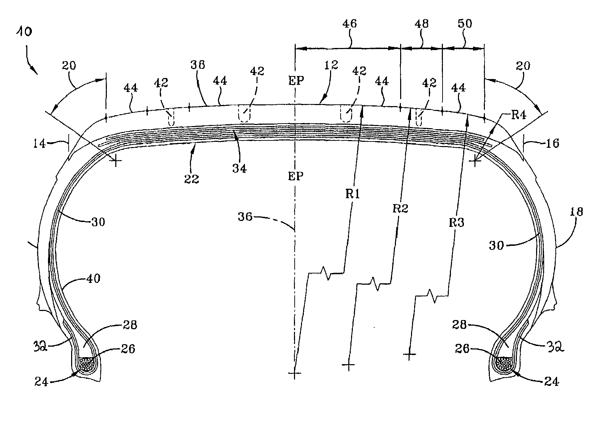

The accompanying drawing, which is incorporated in and constitutes a part of this specification, illustrates an embodiment of the invention and, together with a general description of the invention given above, and the detailed description given below, serves to explain the invention.

The FIGURE is a cross-sectional view of a pneumatic tire in accordance with the present invention.

### Definitions

"Axial" and "axially" mean the lines or directions that are parallel to the axis of rotation of the tire.

"Crown" refers to substantially the outer circumference of a tire where the tread is disposed.

"Circumferential" means circular lines or directions extending along the surface of the tread perpendicular to the axial direction.

"Equatorial plane (EP)" means the plane perpendicular to the tire's axis of rotation and passing through the center of its tread.

"Footprint" means the contact patch or area of contact of the tire tread with a flat surface at zero speed and under design load and pressure.

"Lateral" means a direction parallel to the axial direction, as in across the width of the tread or crown region.

"Outer" means toward the tire's exterior.

"Radial" and "radially" mean directions radially toward or away from the axis of rotation of the tire.

"Shoulder" means the upper portion of sidewall just below the tread edge.

"Sidewall" means that portion of a tire between the tread and the bead area.

"Tread" means a molded rubber component which, when bonded to a tire casing, includes that portion of the tire that comes into contact with the road when the tire is normally inflated and under normal load.

### Detailed Description

With reference to the FIGURE, a pneumatic tire 10 of the present invention includes a road-contacting tread 12 extending between lateral edges 14, 16, a pair of sidewalls 18 extending from the lateral edges 14, 16, respectively, a shoulder 20 defined at the juncture between each sidewall 18 and tread 12, and a carcass 22 defining a support structure for tire 10. The carcass 22 includes a pair of beads 24 each having an annular inextensible bead core 26 of steel filaments and an apex 28. Each of the sidewalls 18 is terminated by a corresponding one of the beads 24. The carcass 22 further includes at least one composite ply structure 30 having opposite tum-up ply ends 32 each wrapped about one of the bead cores 26. Tire 10 has mirror symmetry for reflection about an equatorial plane 36 bisecting tire 10 midway between lateral edges 14, 16 and is labeled with reference numerals to reflect the mirror symmetry.

Arranged between the tread 12 and the carcass 22 is a belt package 34 typically characterized by a plurality of individual cut belt plies and/or spiral wound belt layers. The construction of the belt package 34 varies according to the tire construction. The plies of the ply structure 30 and the belt package 34 generally consist of cord reinforced elastomeric material in which the cords are steel wire or polyamide filaments and the elastomer is a vulcanized rubber material.

When mounted on a rim and placed on a vehicle, the tread 12 furnishes traction and tire 10 contains an inflation fluid, like nitrogen or air, that sustains the vehicle load. A liner 40, which may be formed of, for example, halobutyl rubber, defines an air impervious chamber for containing the air pressure when the tire 10 is inflated. The tread 12 includes a radially outermost, road-contacting surface 38 that extends laterally from the equatorial plane 36 toward each of the lateral edges 14, 16. The tread 12 has a plurality of continuous circumferential grooves 42 and a plurality of tread ribs 44 defined by a plurality of lateral grooves (not shown) extending axially between adjacent circumferential grooves 42.

The road-contacting surface 38 of tread 12 includes a convexly curved first region 46, a convexly curved second region 48, and a convexly curved third region 50 extending laterally between the equatorial plane 36 and the shoulder 20 nearest lateral edge 16. The three regions 46, 48, 50 are preferably mirrored symmetrically about the equatorial plane 36, which implies that three identical regions are also defined between the equatorial plane 36 and the shoulder 20 nearest lateral edge 14. The three regions 46, 48, 50, when mirrored, collectively define the tread width of tire 10, which represents the arc length of the road-contacting surface 38 of tread 12 in a plane parallel to the axis of rotation of the tire 10.

The first and second regions 46, 48 represent the lateral width of the road-contacting surface 38 of tread 12 normally in contact with the road. The third region 50 may contact the road under tire service conditions like loading, braking, and cornering as the shoulder 20 bends. The second region 48 is preferably arranged coextensive with the third region 50 and smoothly joins the third region 50 tangentially at a location on the surface 38 that is smoothly continuous and, therefore, free of any circumferential grooving, similar to grooves 42. In one embodiment of the present invention, the third region 50 is arranged coextensive with the shoulder 20. However, the present invention is not so limited as additional regions may be included between the third region 50 and the shoulder 20. The first region 46 may be composed of one or more individual curved regions (not shown), subject to the requirement these regions extend laterally across one-fifth to one-third of the total tread width.

The first region 46 has at least a radius of curvature R1 defined at a location on road-contacting surface 38 immediately adjacent to the second region 48. The radius R1 is independent of multiple curvatures that could exist between the equatorial plane 36 and the radius R1. Radius of curvature is defined as the radius of a circular sector having a curvature and evaluated in a lateral direction. The invention contemplates that the first region 46 may be characterized by multiple radii of curvature and that the radius of curvature R1 may represent the curvature of only the convex portion of road-contacting surface 38 adjacent to the second region 48.

The second and third regions 48, 50 have respective radii of curvature R2, R3, which are measured at the groove-free location on road-contacting surface 38 along which they join coextensively. The radius of curvature R3 of the third region 50 is less than the radius of curvature R2 of the second region 48. Preferably, the radius of curvature R3 of the third region 50 is equal to 0.25 to 0.5, preferably 0.3 to 0.4, times the radius of curvature R2 of the second region 48. The presence of these two regions 48, 50 of differing radius of curvature R2, R3 permits an increase in the drop of the tread area from the equatorial plane 36 to the shoulder 20 while prohibiting the shoulder 20 from contacting the road and while preserving the wear balance of tire 10. The radius of curvature R2 of the second region 48 is less than the radius of curvature R1 of the first region 46. Preferably, the radius of curvature R2 of the second region 48 is equal to 0.2 to 0.5 , more preferably 0.25 to 0.4, times the radius of curvature R1 of the first region 46. The radius of curvature R3 of the third region 50 is four to six times, preferably five times or about five times a radius of curvature R4 of the shoulder 20.

The shape of the road-contacting surface 38 may be determined using a finite element analysis. In one specific embodiment of the present invention, pneumatic tire 10 is a 235/65R17 tire and the radius of curvature R1 of the first region 46 is 700 to 800 mm, preferably 750 mm, the radius of curvature R2 of the second region 48 is 200 to 300 mm, preferably 250 mm, the radius of curvature R3 of the third region 50 is 70 to 130 mm, preferably 100 mm, and the radius of curvature R4 of the shoulder 20 is 10 to 30 mm, preferably 20 mm.

As mentioned above, the road-contacting surface 38 of the tread 12 is unbroken across the circumferential interface between the second and third regions 48, 50. In other words, none of the grooves 42 is positioned at this interface so that the second and third regions 48, 50 are smoothly continuous, tangential, and unbroken across their circumferential interface. The presence of one of the grooves 42 at this circumferential interface is undesirable because the second and third regions 48, 50 may contact the road when shoulder 20 bends and tread skewness increases under tire service conditions like loading, braking, and cornering. However, the present invention is not so limited as the impact of circumferential grooves across the first third of second and third regions 48, 50 together nearest to equatorial plane 36 is relatively low. The extent of the first third of regions 48, 50 is contingent upon the lateral extent of the regions 48, 50 themselves and will vary with the lateral dimension of these regions 48, 50. In any event, the third region 50 is free of circumferential grooves. Preferably, any additional regions (not shown) between the first region 46 and shoulder 20 also join along a circumferential interface that is free of circumferential grooving, subject to permitting circumferential grooves across the first third of second and third regions 48, 50 together nearest to equatorial plane 36 and the third region 50 being groove free.

In an alternative embodiment of the present invention, a plurality of more than two intermediate regions similar to regions 48 and 50 may be provided between region 46 and the shoulder 20. The multiple regions, each of which is convex, have progressively decreasing radius of curvature with increasing lateral distance from the equatorial plane 36.

In another alternative embodiment of the present invention, the intermediate regions 48, 50 may be described mathematically by a spline function defined on the full width of the intermediate regions 48, 50 (i.e., an interval). The spline function is a smooth curve composed of pieces of simple functions, such as polynomials, defined on subintervals of the interval and joined at their endpoints with a suitable degree of smoothness. Different functions can be defined over different subintervals of the regions 48, 50.

The pneumatic tire 10 of the present invention is characterized by better wear balance and better handling performance under tire service conditions like loading, braking, and cornering. Regions 48, 50 permit the shoulder 20 to bend with a reduced increase in tread skewness near the shoulder 20 under tire service conditions like loading, braking, and cornering, as compared with tires having conventional constructions. The decrease in tread skewness reduces the footprint pressure at the side edges of the tire footprint under these tire service conditions and maintains more of the first region 46 in actual contact with the road. The circumferential interface between regions 48, 50 is free of circumferential grooving or contains circumferential grooves only across the first third of second and third regions 48, 50 nearest to equatorial plane 36, which would otherwise cause these regions 48, 50 to flex too readily under tire service conditions like loading, braking, and cornering. The reduction in pressure buildup improves wear balance because the tread surface has gradations of curvature that are less abrupt than present for a tread surface with a sudden variation of the curvature radius between the shoulder 20 and the adjacent radius on the tread.

## Claims

1. A pneumatic tire comprising a carcass (22) having an axis of rotation, a sidewall (18) centered about said axis of rotation, and a shoulder (20) adjoining said sidewall (18); and a tread (12) disposed radially outward of said carcass (22) and having an equatorial plane (EP) oriented perpendicular to said axis of rotation that bisects said tread (12), wherein said tread (12) includes a radially outermost surface with at least a first region (46), a second region (48), and a third region (50) defined between said equatorial plane (EP) and said shoulder (20), wherein that said second region (48) is arranged coextensive with said third region (50) to define a circumferential interface and said second region (48) is tangent with said third region (50) along said circumferential interface, and wherein said second region (48) and said third region (50) each have a radius of curvature (R2, R3) and said radius of curvature (R3) of said third region (50) is less than said radius of curvature (R2) of said second region (48).

2. The pneumatic tire of claim 1, wherein said third region (50) is arranged coextensive with said shoulder (20), wherein said shoulder (20), said second region (48) and said third region (50) each having a radius of curvature (R2, R3, R4), and wherein said radius of curvature (R3) of said third region (50) is four to six times said radius of curvature (R4) of said shoulder (20), and said radius of curvature of said third region (50) is equal to 0.25 to 0.5 times said radius of curvature (R2) of said second region (48).

3. The pneumatic tire of claim 1 or 2, wherein said radius of curvature (R3) of said third region (50) is five times said radius of curvature (R4) of said shoulder (20).

4. The pneumatic tire of at least one of the previous claims, wherein said first region (46) has a radius of curvature (R1) and said radius of curvature (R2) of said second region (48) is equal to 0.2 to 0.5 times said radius of curvature (R1) of said first region (46).

5. The pneumatic tire of at least one of the previous claims, wherein said second and third regions (48, 50) are described by a spline-based mathematical function.

6. The pneumatic tire of at least one of the previous claims, wherein said second region (48) is arranged coextensive with said first region (46), and said second and third regions (48, 50) extend laterally across one-fifth to one-third of a distance between said equatorial plane (EP) and said shoulder (20).

7. The pneumatic tire of at least one of the previous claims, wherein said radius of curvature (R2) of said second region (48) is less than a radius of curvature (R1) of said first region (46) at a circumferential interface between said first and second regions.

8. The pneumatic tire of at least one of the previous claims, wherein said third region (50) is free of circumferential grooves (42).

9. The pneumatic tire of at least one of the previous claims, wherein said radius of curvature (R1) of said first region (46) is of from 700 to 800 mm, said radius of curvature (R2) of said second region (48) is of from 200 to 300 mm, said radius of curvature (R3) of said third region (50) is of from 70 to 130 mm, and said radius of curvature (R4) of said shoulder (20) is of from 10 to 30 mm.
